# EUROPEAN PATENT SPECIFICATION

(11) **EP 2 399 758 B1**
(45) Date of publication and mention of the grant of the patent: **16.01.2013**
(21) Application number: 10397510.8
(22) Date of filing: 24.06.2010
(51) Int. Cl.: B60B 33/00

(54) **Castor**
Gleitrolle
Galet pivotant

(43) Date of publication of application: 28.12.2011
(73) Proprietor: K. Hartwall Oy AB, 01150 Söderkulla (FI)
(72) Inventor: Grönhom, Jack, 01150, Söderkulla (FI)
(74) Representative: Arvela, Sakari Mikael

(56) References cited:
- EP-A1- 2 106 929
- GB-A- 2 092 079
- GB-A- 2 164 846
- GB-A- 2 231 625
- GB-A- 2 382 981

## Description

### Field of the invention

The present invention relates to castors and especially castors that are subject to rough handling due to use of mechanical handling equipment such as forklifts and pallet trucks. In particular, the invention relates to castors used in dollies, roll containers and other devices used for transportation and handling of goods. More specifically the invention relates to the preamble portion of claim 1. Such a castor according to the preamble of claim 1 is known from GB 2 231625 A.

### Background art

Traditionally, roll containers, dollies and suchlike wheeled material handling devices have been equipped with various different castors suitable for the application in question. As said devices are likely to be exposed to rough handling, their design emphasizes robustness. Accordingly, a common castor used in such devices features roller bearings, which are known to withstand lateral impacts. This is important in everyday use, since the castors of roll containers, for example, receive lateral shocks from forklifts been driven in a hurry or recklessly. Roller bearings provide good resistance to lateral impacts particularly because the bearing is as wide as the wheel, whereby the wheel is supported along its entire width.

However, roller bearings are also known to have rather high rolling resistance, which results in poor handling. Moreover, the initially poor mobility of the roller bearing is prone to further degrade over time. This is disadvantageous because the expected life span of a castor is considerably long and the purpose of roll containers, for example, is to assist in moving heavy objects around. In this respect, the castor should provide low rolling resistance over a long life span.

One solution to this would be to use a plurality of ball bearings in each castor. This would increase the unit cost to excess and the unit would have many movement joints causing friction. Castors having only one ball bearing would be a solution to lowering the rolling resistance, but single ball bearing castors are known to have poor tolerance for lateral impacts.

### Aim of the invention

It is therefore the object of the present invention to alleviate at least some of the problems associated with the prior art and to provide an improved castor.

It is a particular aim of the invention to provide a castor having high side impact resistance and low rolling resistance.

### Summary

The object is achieved with a novel ball bearing construction. The castor according to the present invention comprises a wheel that has an axial central bore and an inner portion in the vicinity around the bore. The castor also comprises a hub, which is adapted coaxially and at least partially within the central bore of the wheel. The hub comprises radially protruding labyrinths, which are adapted to cover at least partly the side surface of the inner portion of the wheel. The castor further comprises a single ball bearing, which is adapted to connect the hub to the wheel so that the bearing is protected from external impurities by the labyrinths, whereby the bearing provides assisted rotational movement between the hub and the wheel. The castor has been provided with an innovative radial clearance between the hub and inner portion of the wheel. The clearance is dimensioned to provide a flexing zone for accommodating elastic deformations of the wheel upon external lateral impacts subjected thereto. When the wheel is elastically deformed due to a lateral impact, the hub is adapted to provide radial support for the inner portion of the elastically deformed wheel, when the flexed wheel has consumed the flexing zone and becomes into contact with the hub.

More specifically the present invention is characterized by what is stated in the characterizing portion of claim 1.

Considerable benefits are gained with aid of the present invention. The novel castor provides improved side impact resistance compared to conventional single ball bearing constructions. On the other hand, the castor provides low rolling resistance compared to roller bearings. The castor is also reliable as the single ball bearing is protected from external impurities by the labyrinths of the hub and maintaining high performance over time.

### Brief description of drawings

In the following certain embodiments of the invention are described in detail with reference to the accompanying drawings, in which:
Fig. 1 presents a cross-section view of a castor assembly according to an embodiment of the present invention,
Fig. 2 presents an isometric view of the castor assembly of Fig. 1,
Fig. 3 presents a cross-section view of the castor of Fig. 1,
Fig. 4 presents a detailed view of the relationship between the hub and wheel of the castor of Fig. 1, and
Fig. 5 presents a cross-section view of a conventional castor.

### Detailed description of preferred embodiments

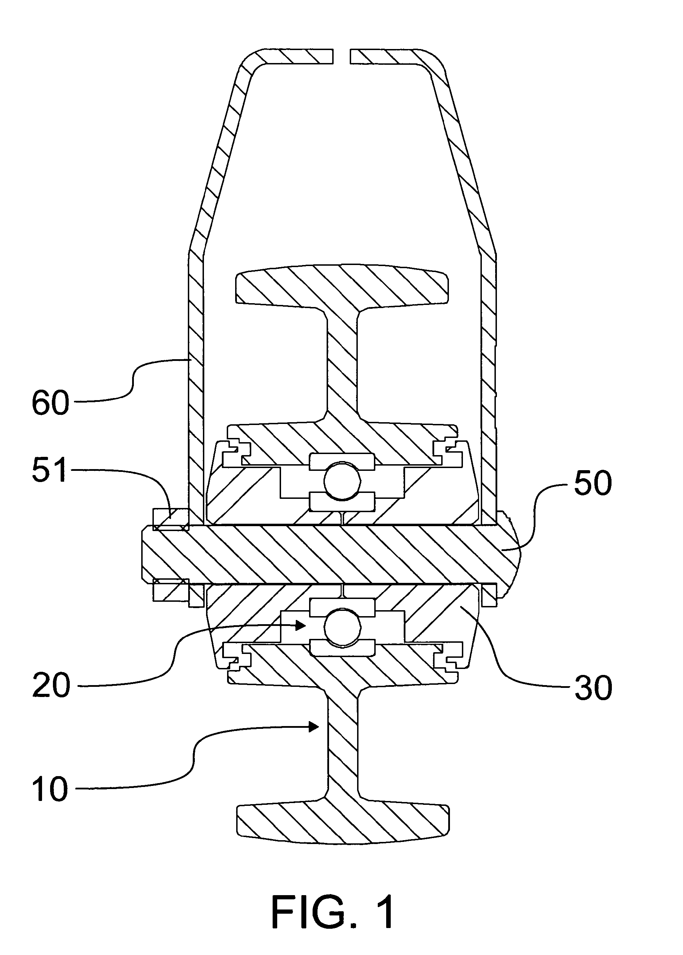

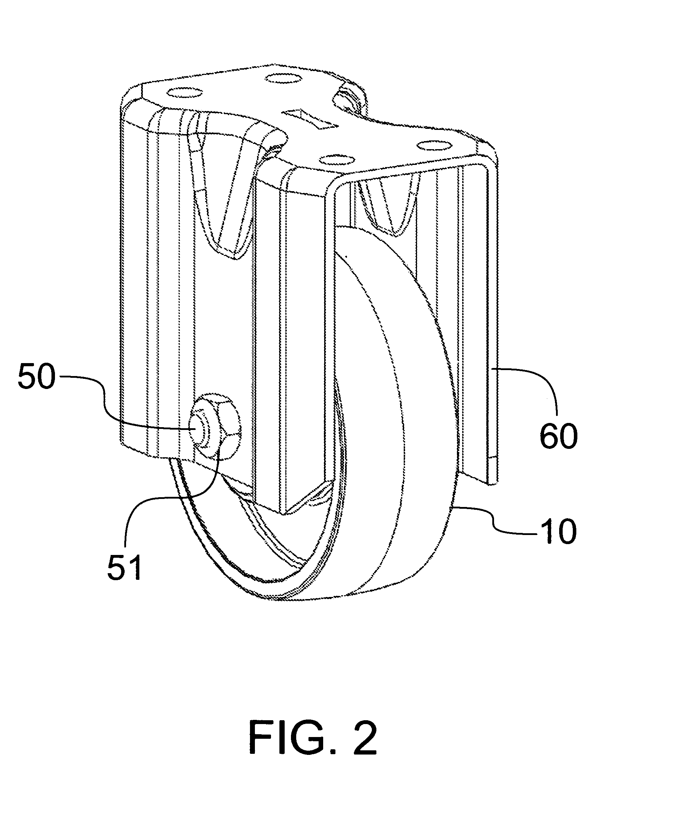

As illustrated in Figs. 1 and 2, the present invention provides a castor and castor assembly especially suitable for use as a stabilizer wheel in roll containers, dollies, etc. The present invention is also suitable for other applications, such as guide wheels. The castor assembly comprises a castor 1, the top portion of which is covered by a fork 60, which is further fixed to the roll container or alike. The fork 60 can also be an integral part of the roll container of alike. The wheel 10 of the castor 1 is connected to the fork 60 by means of an axle 50, such as a bolt, which has a flange at one end and a nut 51 at the other end. The fork 60 is thereby tightened around the castor 1 so that the fork 60 and axle 50 are integrated into the structure leaving the wheel 10 free to rotate in respect to the ground and roll container or alike. Accordingly in this context the term *axial* refers to the direction of an axis, about which the rotation of the wheel occurs. In the embodiment described herein, said axis is the axis of revolution of the axle 50. Furthermore the term *radial* refers to the normal directions of said axis. Finally the term *lateral* refers to the side of the castor, i.e. not radial.

The castor 1 has three major components. The hub 30 connects the castor 1 to the fork 60 via the axle 50. The ball bearing 20 is adapted between the hub 30 and the wheel 10 to provide assisted rotational movement between the wheel 10 and the fork 60, i.e. the frame of the object to be moved.

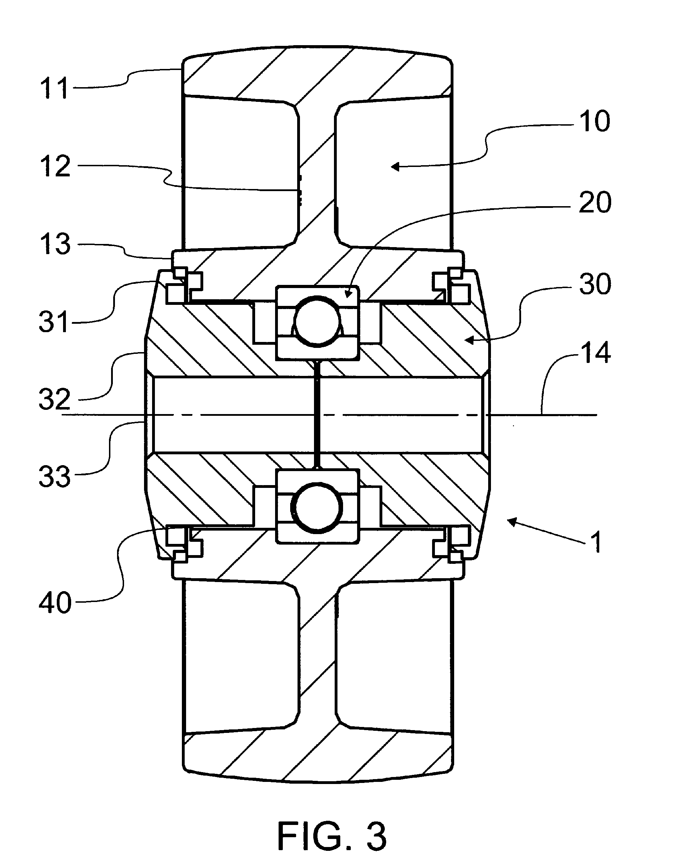

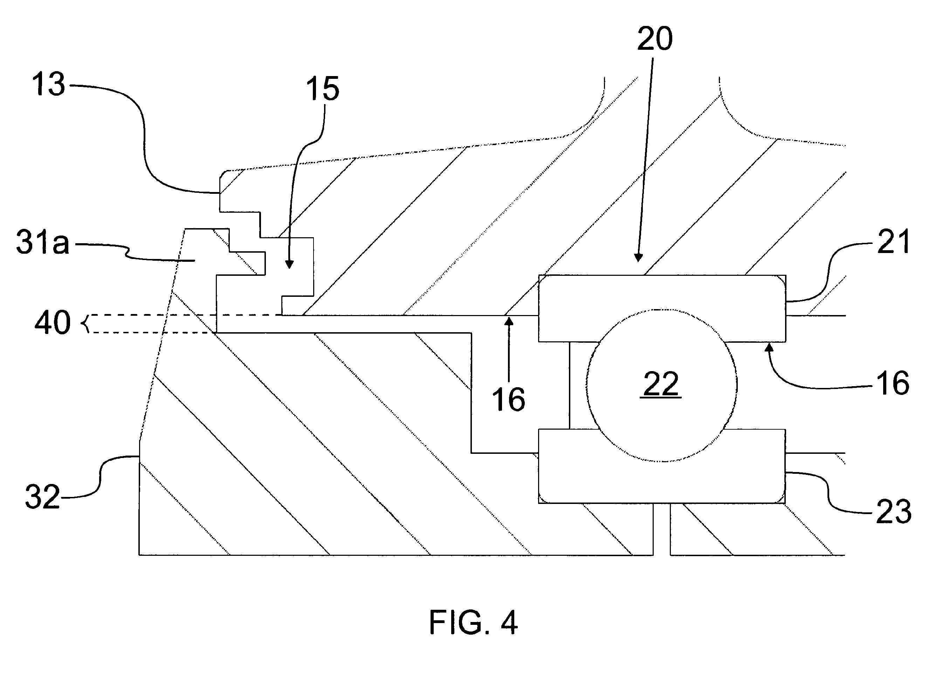

Referring now to Fig. 3, which illustrates the castor 1 in greater detail. The wheel 10 of the castor 1 has an outer rim 11, which is offset from the flange-like inner portion 13 by a connecting flange 12. The wheel 10 has a central bore, into which the rest of the castor 1 is provided. The wheel 10 is preferably made of an elastic material, such as polyamide or polypropylene, which is able to bend elastically before fracture and which is easy to cast. The bore surface 16 of the wheel 10 has a central annular groove, into which a ball bearing 20 has been fitted. According to a preferred embodiment, the wheel 10 is injection molded on and around the ball bearing 20 so that when the wheel 10 cools down, it forms an interference fit or a shrink fit between the two. The outer race 21 of the ball bearing 20 is thereby embedded into the bore surface 16 of the wheel 10. The single ball bearing 20 can be a standard ball bearing having low rolling resistance. According to the embodiment of Fig. 1, the ball bearing has a single row of bearing balls, but also other types of ball bearings are applicable. The inner race 23 ball bearing 20 is thereby fixed to the fork 60 and the outer race 21 rotates in respect to the inner race 23 by means of balls 22 in between (Figs. 1 and 4).

The castor 1 also comprises hub 30, which is also provided to the central bore of the wheel 10. According to one embodiment, the hub 30 consists of two halves 32, which upon assembly of the castor assembly are inserted to the wheel bore and tightened against the ball bearing 20 by means of the axle 50, nut 51 and fork 60 (Fig. 1). Accordingly, the inner axial 14 terminal ends of the hub halves 32 have shoulders to allow tight contact with the ball bearing (Fig. 3). The hub 30 also has a central bore 33 coaxial to the bore of the wheel 10 for accommodating the axle 50. The hub 30 is further equipped with radially protruding labyrinths 31 adapted to cover at least partly the side surface of the inner portion 13 of the wheel 10 so that the bearing 20 is protected from external impurities by the labyrinths 31. According to one embodiment, the inner portion 13 of the wheel 10 has an annular recess 15 and the labyrinths 31 have corresponding protruding portions 31a that are adapted into the recess 15 for enhancing the protection.

Referring now to Fig. 4, where the relationship between the hub 30 and wheel 10 is illustrated in greater detail. A radial clearance 40 has been provided between the hub 30 and the inner portion 13 of the wheel 10. The clearance 40 is dimensioned to provide an annular flexing zone for accommodating elastic deformations of the wheel 10 upon external axial impacts subjected thereto, wherein the hub 30 is adapted to provide radial support for the inner portion 13 of the elastically deformed wheel 10. In other words the outer envelope support surface of the hub 30 provides a support surface to the bore surface 16 of the wheel 10 upon elastic deformation thereof. The outer envelope support surface of the hub 30 preferably has a width exceeding that of the ball bearing 20 for distributing the load over a large area.

When the castor 1 is subjected to a lateral impact, such as a shock caused by colliding forklift fork, the wheel 10 bends elastically around the center of the castor 1. This causes the inner portion 13 of the wheel to travel towards the hub 30. The hub 30 is therefore adapted to support the wheel 10 upon elastic deformation thereof at outer peripheries of the castor 1 on both sides of the ball bearing 20. These outer peripheries are considerably closer to the supporting points of the castor 1, i.e. the fork 60, than for example the central portion of the castor 1, where the ball bearing 20 is located. In other words, the hub 30 is adapted to transfer axial forces caused by elastic deformations of the wheel 10 to the axle 50 to a region between the fork 60 and the ball bearing 20. This improves the side impact resistance of the castor 1 as opposed to conventional castors.

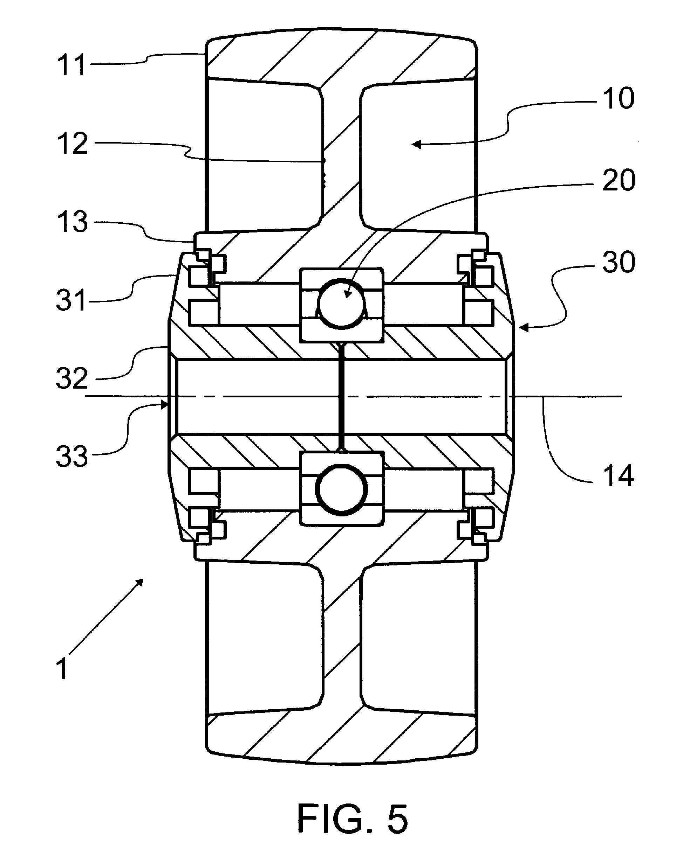

The clearance 40 is dimensioned so that is large enough so that inner portion 13, specifically the bore surface 16, of the wheel 10 is detached from the hub 30 and so that the inner portion 13 is free to flex towards the hub 30 when the wheel 10 has been subjected to lateral impacts and has elastically deformed. For example, a suitable clearance 40 for a castor 1 having a 100 mm diameter wheel 10 would be around 0,5 to 1,5 mm, preferably about 1 mm. If the clearance 40 is too small, the flexing zone is inadequate and there is not enough room for the inner portion 13 of the elastically deforming wheel 10 to travel radially. Also, possible impurities can clog it up preventing the wheel 10 from turning. If, on the other hand, the clearance 40 is too large (Fig 5), the inner portion 13 of the bending wheel 10 does not touch and therefore receive sufficient support from the hub 30, whereby the construction experiences plastic deformations. In such an event, the ball bearing 20 may become detached from the wheel 10 through fracture, for example.

The hub 30 is adapted to support the wheel 10, particularly the inner portion 13 thereof. The impact is further transferred from the hub 30 on to the surrounding structures. The hub 30 delivers the forces to the axle 50, which is supported from both ends by the fork 60. The forces are thereby transferred close to said support points and the axle 50 may also experience elastic deformations. Accordingly, the axle 50 is designed so that the bending will not be permanent as the strain does not exceed the yield of the material.

The castor 1 according to the invention may also be provided with different constructions. For example, the hub 30 may also have another shape able to provide radial support for the inner portion 13 of the elastically deformed wheel 10. For example, the supporting portion of the hub 30, i.e. the part or ridge of the hub half 32 that is adapted to mate with the bore surface 16 of the wheel 10, may be narrower provided that it is designed to withstand the radial impacts of the deformed wheel 10. According to one embodiment, said supporting portion of the hub is a narrow shoulder, having a width half of the ball bearing 20, which shoulder is reinforced with radial ribbing.

Overall, the hub 30 and the wheel 10 shall be designed so that the clearance 40 provides a sufficient flexing zone and so that the hub 30 provides support once the flexing zone has been taken up by elastic deformation of the wheel 10. In this sense the clearance between the hub 30 and wheel 10 of conventional castors, as illustrated in Fig. 5, does not have said inventive effect. A lateral impact to a conventional castor 1 of Fig. 5, would cause the wheel to bend about the central portion of the castor 1, whereby the bore surface of the wheel 10 would become into contact with the protrusion of the labyrinth 31 of the hub 30. Since conventional labyrinths 31 are designed to merely keep external impurities out of the bearing space, its protrusion does not provide support but bends outward. This causes the inner portion 13 to continue travel toward the hub 30, whereby the construction experiences plastic deformation. In one scenario, the wheel 10 has a fracture and becomes detached from the ball bearing 20 causing a complete destruction of the castor 1. In another scenario, there is no such fracture, but the middle portion of the axle

(not shown in Fig. 5) inside the bearing 20 deforms plastically to a stretched Z-shape. This also would lead to complete destruction of the castor 1.

**Table 1: List of reference numbers.**

| **Number** | **Part** | **Number** | **Part** |
|---|---|---|---|
| 1 | castor | 23 | inner race |
| 10 | wheel | 30 | hub |
| 11 | rim | 31 | labyrinth |
| 12 | connecting flange | 31a | protrusion |
| 13 | inner portion | 32 | hub half |
| 14 | axis of revolution | 33 | hub bore |
| 15 | recess | 40 | clearance |
| 16 | wheel bore surface | 50 | axle |
| 20 | bearing | 51 | nut |
| 21 | outer race | 60 | fork |
| 22 | ball | | |

## Claims

1. A castor (1) comprising:
- a wheel (10) having an axial central bore and an inner portion (13) in the vicinity around the bore,
- a hub (30) adapted coaxially and at least partially within the central bore of the wheel (10), the hub (30) comprising radially protruding labyrinths (31) adapted to cover at least partly the side surface of the inner portion (13) of the wheel (10), and
- a single ball bearing (20) adapted to connect the hub (30) to the wheel (10) so that the bearing (20) is protected from external impurities by the labyrinths (31), whereby the bearing (20) provides assisted rotational movement between the hub (30) and the wheel (10),
**characterized by** a radial clearance (40) between the hub (30) and inner portion (13) of the wheel (10), the clearance (40) being dimensioned to provide a flexing zone for accommodating elastic deformations of the wheel (10) upon external lateral impacts subjected thereto, wherein the hub (30) is adapted to provide radial support for the inner portion (13) of the elastically deformed wheel (10).

2. Castor (1) according to claim 1, wherein the elastic deformation occurs in respect to the normal of the axis of revolution (14) of the wheel (10).

3. Castor (1) according to claim 1 or 2, wherein the hub (30) is adapted to support the wheel (10) upon elastic deformation thereof at outer peripheries of the castor (1) on both sides of the ball bearing (20).

4. Castor (1) according to claim 3, wherein the outer envelope support surface of the hub (30) has a width exceeding that of the ball bearing (20).

5. Castor (1) according to any of the preceding claims, wherein the hub (30) is adapted to support the bore surface (16) of the wheel (10) upon elastic deformation thereof.

6. Castor (1) according to any of the preceding claims, wherein the inner portion (13) has an annular recess (15) and the labyrinth (31) has a corresponding axially protruding portion (31a) adapted into the recess (15).

7. Castor (1) according to any of the preceding claims, wherein the clearance (40) is 0,5 to 1,5 mm.

8. Castor (1) according to claim 7, wherein the radial clearance (40) is about 1 mm.

9. Castor (1) according to claim 9, wherein the ball bearing (20) is injection molded into the wheel (10), whereby the outer race (21) of the ball bearing (20) is embedded into the bore surface (16) of the wheel (10).

10. A castor assembly comprising a castor of claim 1, the hub (30) of which has a central bore (33) coaxial to the bore of the wheel (10), **characterized in that** the assembly further comprises:
- a fork (60) adapted around the hub (30), and
- an axle (50) adapted to penetrate the bore (33) of the hub (30) and the fork (60) so that the fork (60) is fixed to the hub (30).

11. A castor assembly of claim 10, wherein the hub (30) is adapted to transfer axial forces caused by elastic deformations of the wheel (10) to the axle (50) to a region between the fork (60) and the ball bearing (20).

## Patentansprüche

1. Schwenkrolle (1), umfassend:
- ein Rad (10) mit einer axialen Mittenbohrung und einem inneren Abschnitt (13) in dem Bereich um die Bohrung herum;
- eine Nabe (30), die koaxial und mindestens teilweise innerhalb der Mittenbohrung des Rads (10) angepasst ist, wobei die Nabe (30) radial vorstehende Labyrinthe (31) umfasst, die angepasst sind, die Seitenfläche des inneren Abschnitts (13) des Rads (10) mindestens teilweise abzudecken; und
- ein Einzel-Kugellager (20), das angepasst ist, die Nabe (30) mit dem Rad (10) zu verbinden, so dass das Lager (20) durch die Labyrinthe (31) vor äußeren Verunreinigungen geschützt ist, wodurch das Lager (20) eine unterstützte Rotationsbewegung zwischen der Nabe (30) und dem Rad (10) bereitstellt;
**gekennzeichnet durch** einen radialen Abstand (40) zwischen der Nabe (30) und dem inneren Abschnitt (13) des Rads (10), wobei der Abstand (40) bemessen ist, um eine Biegezone bereitzustellen, um elastische Verformungen des Rads (10) bei äußeren seitlichen Belastungen aufzunehmen, die darauf ausgeübt werden, wobei die Nabe (30) angepasst ist, eine radiale Abstützung für den inneren Abschnitt (13) des elastisch verformten Rads (10) bereitzustellen.

2. Schwenkrolle (1) nach Anspruch 1, wobei die elastische Verformung in Bezug auf die Normale der Rotationsachse (14) des Rads (10) auftritt.

3. Schwenkrolle (1) nach Anspruch 1 oder 2, wobei die Nabe (30) angepasst ist, das Rad (10) bei einer elastischen Verformung davon an äußeren Rändern der Schwenkrolle (1) auf beiden Seiten des Kugellagers (20) abzustützen.

4. Schwenkrolle (1) nach Anspruch 3, wobei die Abstützfläche der Außenhülle der Nabe (30) eine Breite aufweist, welche die des Kugellagers (20) überschreitet.

5. Schwenkrolle (1) nach einem der vorstehenden Ansprüche, wobei die Nabe (30) angepasst ist, die Bohrungsoberfläche (16) des Rads (10) bei elastischer Verformung davon abzustützen.

6. Schwenkrolle (1) nach einem der vorstehenden Ansprüche, wobei der innere Abschnitt (13) eine ringförmige Aussparung (15) aufweist und das Labyrinth (31) einen entsprechenden axial vorstehenden Abschnitt (31a) aufweist, der in die Aussparung (15) angepasst ist.

7. Schwenkrolle (1) nach einem der vorstehenden Ansprüche, wobei der Abstand (40) 0,5 bis 1,5 mm beträgt.

8. Schwenkrolle (1) nach Anspruch 7, wobei der Abstand (40) etwa 1 mm beträgt.

9. Schwenkrolle (1) nach Anspruch 9, wobei das Kugellager (20) in das Rad (10) spritzgegossen ist, wodurch die äußere Laufbahn (21) des Kugellagers (20) in die Bohrungsoberfläche (16) des Rads (10) eingebettet ist.

10. Schwenkrollenanordnung, umfassend eine Schwenkrolle nach Anspruch 1, deren Nabe (30) eine Mittenbohrung (33) aufweist, die koaxial zu der Bohrung des Rads (10) ist, **dadurch gekennzeichnet, dass** die Anordnung weiter umfasst:
- eine Gabel (60), die um die Nabe (30) herum angepasst ist; und
- eine Achse (50), die angepasst ist, die Bohrung (33) der Nabe (30) und die Gabel (60) zu durchdringen, so dass die Gabel (60) an der Nabe (30) befestigt ist.

11. Schwenkrollenanordnung nach Anspruch 10, wobei die Nabe (30) angepasst ist, axiale Kräfte, die durch elastische Verformungen des Rads (10) verursacht werden, auf die Achse (50) in einen Bereich zwischen der Gabel (60) und dem Kugellager (20) zu übertragen.

## Revendications

1. Galet pivotant (1) comprenant :
- une roue (10) présentant un perçage central axial et une partie intérieure (13) à proximité du perçage,
- un moyeu (30) adapté coaxialement et au moins en partie dans le perçage central de la roue (10), le moyeu (30) comprenant des labyrinthes faisant saillie radialement (31) adaptés pour recouvrir au moins en partie la surface latérale de la partie intérieure (13) de la roue (10), et
- un simple roulement à billes (20) adapté pour relier le moyeu (30) à la roue (10) de sorte que le roulement (20) soit protégé des impuretés extérieures par les labyrinthes (31), moyennant quoi le roulement (20) fournit un mouvement de rotation assisté entre le moyeu (30) et la roue (10),
**caractérisé par** un espace radial (40) entre le moyeu (30) et la partie intérieure (13) de la roue (10), l'espace (40) étant dimensionné pour fournir une zone de flexion destinée à loger des déformations élastiques de la roue (10) suite aux impacts latéraux externes auxquels elle est soumise, dans lequel le moyeu (30) est adapté pour fournir un support radial à la partie intérieure (13) de la roue déformée élastiquement (10).

2. Galet pivotant (1) selon la revendication 1, dans lequel la déformation élastique apparaît par rapport à la normale de l'axe de révolution (14) de la roue (10).

3. Galet pivotant (1) selon la revendication 1 ou 2, dans lequel le moyeu (30) est adapté pour supporter la roue (10) suite à sa déformation élastique sur des périphéries extérieures du galet pivotant (1) des deux côtés du roulement à billes (20).

4. Galet pivotant (1) selon la revendication 3, dans lequel la surface porteuse de l'enveloppe extérieure du moyeu (30) présente une largeur excédant celle du roulement à billes (20).

5. Galet pivotant (1) selon l'une quelconque des revendications précédentes, dans lequel le moyeu (30) est adapté pour supporter la surface perforée (16) de la roue (10) suite à sa déformation élastique.

6. Galet pivotant (1) selon l'une quelconque des revendications précédentes, dans lequel la partie intérieure (13) présente un évidement annulaire (15) et le labyrinthe (31) présente une partie correspondante faisant saillie axialement (31a) adaptée dans l'évidement (15).

7. Galet pivotant (1) selon l'une quelconque des revendications précédentes, dans lequel l'espace (40) est compris entre 0,5 et 1,5 mm.

8. Galet pivotant (1) selon la revendication 7, dans lequel l'espace radial (40) s'élève environ à 1 mm.

9. Galet pivotant (1) selon la revendication 9, dans lequel le roulement à billes (20) est moulé par injection dans la roue (10), moyennant quoi la bague de roulement extérieure (21) du roulement à billes (20) est intégrée dans la surface perforée (16) de la roue (10).

10. Ensemble de galet pivotant comprenant un galet pivotant selon la revendication 1, dont le moyeu (30) présente un perçage central (33) coaxial au perçage de la roue (10), **caractérisé en ce que** l'ensemble comprend en outre :
- une fourche (60) adaptée autour du moyeu (30),
et
- un axe (50) adapté pour pénétrer le perçage (33) du moyeu (30) et la fourche (60) de sorte que la fourche (60) soit fixée au moyeu (30).

11. Ensemble de galet pivotant selon la revendication 10, dans lequel le moyeu (30) est adapté pour transférer des forces axiales causées par des déformations élastiques de la roue (10) à l'axe (50) à une région entre la fourche (60) et le roulement à billes (20).
